# EUROPEAN PATENT APPLICATION

(11) **EP 4 379 624 A1**
(43) Date of publication of application: **05.06.2024**
(21) Application number: 22210484.6
(22) Date of filing: 30.11.2022
(51) Int. Cl.: G06Q 10/0631

(54) **CONSTRAINT-BASED ENGINEERING PROCESS MANAGEMENT FRAMEWORK**

(71) Applicant: Siemens Mobility Austria GmbH, 1210 Wien (AT)
(72) Inventor: Haselböck, Alois, 3394 Schönbühel-Aggsbach (AT); Sperl, Simon, 4030 Linz (AT)
(74) Representative: Siemens Patent Attorneys

(57) **Abstract**

Computer implemented method for a constraint-based engineering process management framework, wherein the engineering process (PRO) comprises at least one task (TAS), wherein each task (TAS) represents a unit of work, characterized in that each task (TAS) contains a set of task variables (VAR), and each task variable (VAR) is a key-value pair and wherein the dynamic behavior of the process (PRO) and its tasks is specified by transition objects (TRA), wherein a transition object (TRA) defines all the constraints (CON) for a task (TAS) to change from a given from-state (FST) to a given to-state (TST) .

## Description

### FIELD OF THE INVENTION

This application relates to process management frameworks. More particularly, this application relates to a computer implemented method for a constraint-based engineering process management framework. In computer programming, a framework is an abstraction in which software, providing generic functionality, can be selectively changed by additional user-written code, thus providing application-specific software.

### BACKGROUND OF THE INVENTION

Classic business processes can be found in call centers, medical facilities, banks etc. They usually have relatively short runtimes and strict sequences. A variant of such business processes are engineering processes of technical products and systems. In contrast to conventional business processes, engineering processes typically are long-living and must deal with unforeseen events again and again.

There are several aspects that usually are not resolved in a satisfactory manner by conventional Business Process Model and Notation (BPMN), but which are important requirements in engineering processes:
Flexibility: Unforeseen events (like the arrival of a new set of customer data) can happen in each step of the process. To implement this in BPMN would mean to add events and loops to each and every activity, which makes the representation of the process unmanageable.
Safety: There is a strong focus on preconditions and constraints of each task in engineering processes. E.g., a task may only be started or finished, if a certain artifact with the right version is stored in the right place of the file system. The possibilities to specify such preconditions and constraints in conventional business process management methods is very limited.
Maintainability: Engineering tasks are long-living and often run for years. When process definitions change, all existing process instances must be migrated to the new process version. This is usually very complicated in conventional, graph-based process notations like BPMN, because it often means a re-structuring of the graph of activities. A local modification of only those tasks that actually are changed would better facilitate maintainability.

Tool support for engineering processes (not to be confused with engineering tools, called engineering configurators) is not yet very common in industry. If such tools are used, then either proprietary solutions or business process management (BPM) tools are used. The latter ones are usually not optimally suited for these engineering tasks for the reasons mentioned above.

The main BPM standard is BPMN (Business Process Model and Notation). BPMN is mainly a graphical language and was initially used as a common process documentation language between managers, experts and developers. When trying to build a runnable business process, BPMN by itself is usually not sufficient to completely specify/run a process and additional BPMN-vendor/tool specific modelling is required.

The biggest disadvantage of BPMN in the context of engineering processes is that it is very difficult to provide for unforeseen events, which occur again and again in engineering processes, at all possible points in the process. In addition, long term maintenance of processes is hardly supported.

An alternative to BPMN is CMMN (Case Management Model and Notation). CMMN is a graphical notation used for capturing work methods that are based on the handling of "cases" requiring various activities that may be performed in an unpredictable order in response to evolving situations. Using an eventcentered approach and the concept of a case file, CMMN expands the boundaries of what can be modeled with BPMN, including less structured work efforts and those driven by knowledge workers.

CMMN was built for low-structured processes, focusing on data and workers. But a defined flow of process steps is important in engineering processes, so only a combination of BPMN and CMMN could potentially cope with engineering processes. Usually, CMMN has BPMN compliance, but it is not very often used, because of its lack of simplicity (like BPMN) and its complicated expression language which is hard to read by non-technicians.

Therefore, the problem addressed in this invention is to create a flexible, safe and maintainable business process management framework for engineering processes that overcomes the aforementioned disadvantages of conventional BPMN methods, that allows engineering processes to be represented in a natural way, and that optimally supports engineers in their work.

The proposed solution is simple, focused on engineering processes, and due to its constraints powerful enough to deal with the high safety requirements of industrial products.

### SUMMARY OF THE INVENTION

According to aspects of one embodiment of this disclosure, a computer implemented method for a constraint-based engineering process management framework is disclosed, wherein the engineering process comprises at least one task, wherein each task represents a unit of work, characterized in that each task contains a set of task variables, and each task variable is a key-value pair and wherein the dynamic behavior of the process and its tasks is specified by transition objects, wherein a transition object defines all the constraints for a task to change from a given from-state to a given to-state.

These features increase the flexibility and reduce complexity of the method. They also lead to a safe and maintainable method. Furthermore, these features lead to less resource consumption regarding processing power and storage when executed in a processor with a memory.

Additionally in some embodiments, the task variables can be a user name intended to work on a task, a user role restricting the set of users that are allowed to work on a task, application-specific data, a date, an input from a user, values computed by a function on other variables, the state of a file on a file system, or input from the environment.

According to an embodiment, a task has an initial state and at least one final state.

Additionally in some embodiments, a constraint is a Boolean expression and is based on task states and variables.

These features further increase the flexibility, safety, maintainability and resource-efficiency of the method.

### BRIEF DESCRIPTION OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following figures:
Fig. 1 shows an UML (Unified Modeling Language) diagram of the process management framework,
Fig. 2 shows an interactive interplay between the process management framework, users and the environment, and
Fig. 3 shows an example process of the process management framework.

### DESCRIPTION OF THE DRAWINGS

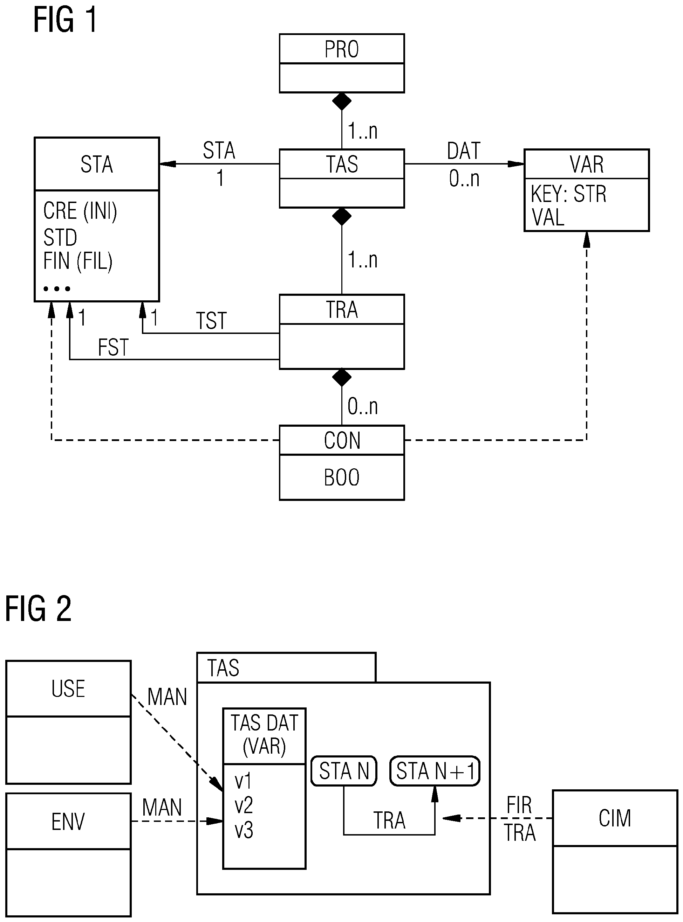

Fig. 1 shows an UML diagram of the process management framework. An engineering process PRO consists of one or more tasks TAS. A task TAS is a unit of work that can usually be performed and completed by a single engineer. The granularity of tasks TAS is a matter of process modelling. A task TAS is always in a defined state STA. STA is an enumeration, i.e., a defined set of constants. The set of states STA used in a process definition is a matter of process modelling. Exactly one state STA must be designated as initial state STA INI, one or more states as final state STA FIL.

In the UML diagram, the filled diamond shapes between "process" PRO and "task" TAS, "task" TAS and "transition" TRA, and "transition" TRA and "constraint" CON represent a composition. A composition in the UML is a special case of association that describes a relationship between a whole and its existential parts.

A somehow minimal set of states STA could be:
- created CRE (initial INI)
- started STD
- finished FIN (final FIL)

An example of another set of states could be:
- created (initial)
- readForStart
- started
- readyForCompletion
- paused
- completed (final)
- cancelled (final)

A task TAS contains task data, also called task variables VAR. A variable VAR is a key-value pair. A task variable VAR can be unset (its value can be "null"). The set of variables VAR strongly depend on the application and on the wanted behavior of a task TAS. Task variables VAR can be:
- the user name intended to work on a task (the "owner")
- the user role restricting the set of users that are allowed to work on a task
- application-specific data, like the version number of a used tool
- a date, like the scheduled completion date of the engineering process
- an input from the user, entered via a GUI; like the willingness on an engineer to start a task, or the confirmation that a certain data check has been done, or that a certain sub-task has been completed successfully
- values computed by a function on other variables
- input from the environment; like the availability of a certain file in a certain directory, or the correct version number in the header of an XML file

The dynamic behavior of a process PRO and its tasks TAS is specified by transition objects TRA. A transition object TRA defines all the conditions - constraints CON - necessary that a task TAS changes its state from a given from-state FST to a given to-state TST. For that, a transition object TRA has assigned a set of constraint objects CON. A constraint CON is a Boolean expression BOO that may involve task states STA and variables VAR.

The notation language of a constraint expression CON is a matter of the implementation design of an engineering process management tool based on the proposed constraint-based engineering process management framework.

Fig. 2 shows an interactive interplay between the process management framework, users USE and the environment ENV. At the beginning of an engineering process PRO, all tasks TAS are in the initial state STA INI. A process PRO is said to be completed when all tasks TAS are in a final state STA FIL. The state STA of a task TAS can only be changed by the process management framework. Task variables VAR can be changed by the engineers USE, by the environment ENV (like changes in the file system), or by computation functions. Working with the process management framework is always of interactive manner: the user USE or the environment ENV changes some task variables VAR, and the process management framework checks and fires some task state transitions TRA. A transition TRA of a task TAS is said to be active, if its from-state FST is the state the task is currently in. A transition TRA is said to be enabled, if all its constraints CON evaluate to true. If a transition TRA does not contain any constraints CON, it is not enabled. Firing a transition TRA means changing the state STA of its task TAS from the from-state FST to the to-state TST. Whenever a task variable VAR or a task state STA was changed in the process PRO, all active transitions TRA of all tasks TAS are re-evaluated simultaneously by the process management framework, and all active, enabled transitions TRA are fired simultaneously. If at any point in time a task TAS does not have any active, enabled transition TRA, its state STA is not changed. If at any point in time a task TAS has more than one active, enabled transition TRA, an arbitrary one of them fires.

The set of constraints CON that are to be re-evaluated whenever something changed can be restricted to those who refer to changed states STA or variables VAR. This is a matter of efficient implementation.

The process management framework is demonstrated on an example, using a semi-formal (pseudo) notation.

The example process PRO consists of three tasks TAS: Two engineering tasks TAS E1 and TAS E2 and a verification task TAS V. The resulting artifacts of task TAS E1 are the files f11 and f12. The resulting artifacts of task TAS E2 are the files f21 and f22. The result of task TAS V is the verification report veriReport. TAS E1 can immediately start. TAS E2 can only start when f11 is available. Task TAS V can only start when all target files are available. Additionally, the owner of task TAS V must not be one of the owners of task TAS E1 or task TAS E2.

Possible states: created CRE (initial INI), started STD, finished FIN (final FIL)
- Task TAS E1:
   ∘ Task variables (VAR E1):
      ▪ owner (a user name)
      ▪ f11Exists (Boolean)
      ▪ f12Exists (Boolean)
      ▪ completeButtonPressed (Boolean)
   ∘ Transition created->started (TRA E1 STD)
      ▪ Constraint: owner != null
   ∘ Transition started->finished (TRA E1 FIN)
      ▪ Constraint: f11Exists & f12Exists
      ▪ Constraint: completeButtonPressed
- Task TAS E2:
   ∘ Task variables (VAR E2):
      ▪ owner (a user name)
      ▪ f21Exists (Boolean)
      ▪ f22Exists (Boolean)
      ▪ completeButtonPressed (Boolean)
   ∘ Transition created->started (TRA E2 STD)
      ▪ Constraint: owner != null
      ▪ Constraint: E1.f11Exists
   o Transition started->finished (TRA E2 FIN)
      ▪ Constraint: f21Exists & f22Exists
      ▪ Constraint: completeButtonPressed
- Task TAS V:
   ∘ Task variables (VAR V):
      ▪ owner (a user name)
      ▪ veriReportExists (Boolean)
      ▪ completeButtonPressed (Boolean)
   ∘ Transition created->started (TRA V STD)
      ▪ Constraint: owner!= null
      ▪ Constraint: owner!= E1. owner & owner != E2.owner
      ▪ Constraint: E1.f11Exists & E1.f12Exists
      ▪ Constraint: E2.f21Exists & E2.f22Exists
   ∘ Transition started->finished (TRA V FIN)
      ▪ Constraint: veriReportExists
      ▪ Constraint: completeButtonPressed

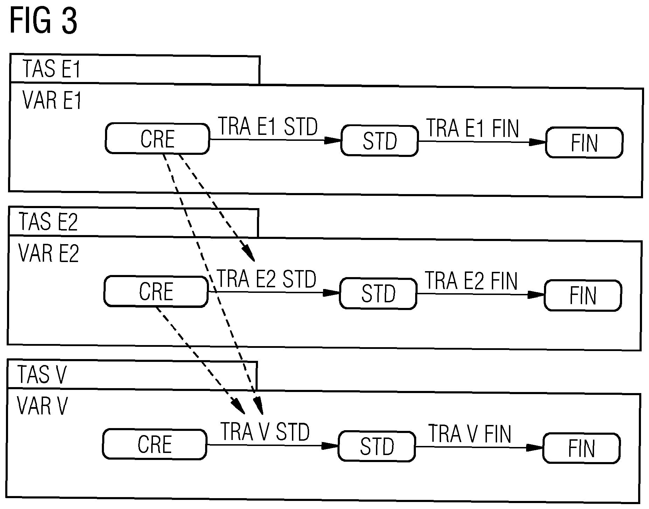

Fig. 3 shows this process PRO as a state diagram. Constraints CON are denoted at the transition edges.

Example transition: If E1.state = created (the initial state) and the variable owner was assigned a user USE, then the transition created->started TRA E1 STD gets enabled and fires. Task TAS E1 transits to state started STD and its owner is intended to work on the task TAS.

Example transition: If E1.state = started and the owner created the target system file f11, the process management framework recognizes the existence of f11 and sets the variable VAR E1.f11Exists to true. When the variable VAR E2.owner was assigned a user USE, transition E2.created->started TRA E2 STD gets enabled and fires. Task TAS E2 transits to state started and its owner is intended to work on the task.

### LIST OF REFERENCE SIGNS

- PRO: Process
- TAS: Task(s)
- TRA: Transition(s)
- CON: Constraint(s)
- VAR: Variable(s)
- STA: State(s)
- FST: fromState
- TST: toState
- DAT: Data
- KEY: Key
- STR: String
- VAL: Value(s)
- FIR: fires
- MAN: manipulates
- USE: User(s)
- ENV: Environment
- CIM: Computer Implemented Method
- CRE: Created
- STD: Started
- FIN: Finished
- INI: Initial
- FIL: Final
- BOO: Boolean Expression

## Claims

1. Computer implemented method for a constraint-based engineering process management framework, wherein the engineering process (PRO) comprises at least one task (TAS), wherein each task (TAS) represents a unit of work, **characterized in that** each task (TAS) contains a set of task variables (VAR), and each task variable (VAR) is a key-value pair and wherein the dynamic behavior of the process (PRO) and its tasks is specified by transition objects (TRA), wherein a transition object (TRA) defines all the constraints (CON) for a task (TAS) to change from a given from-state (FST) to a given to-state (TST).

2. Method of claim 1, wherein the task variables (VAR) can be a username intended to work on a task (TAS), a user role restricting the set of users (USE) that are allowed to work on a task (TAS), application-specific data, a date, an input from a user, values computed by a function on other variables, the state of a file on a file system, or input from the environment (ENV).

3. Method of any of the preceding claims, wherein a task (TAS) has an initial state (STA INI) and at least one final state (STA FIL).

4. Method of any of the preceding claims, wherein a constraint (CON) is a Boolean expression (BOO) and is based on task states (STA) and variables (VAR).

5. Data processing system comprising a processor with a memory configured to carry out the method of any of the preceding claims.

6. Computer program product comprising instructions which, when the program is executed by a computer, cause the computer to carry out the steps of the method of claims 1 to 4.
